**Europäisches Patentamt**

**European Patent Office**

**Office européen des brevets**

(11) Veröffentlichungsnummer: **0 064 141**
**A1**

# (12) EUROPÄISCHE PATENTANMELDUNG

(21) Anmeldenummer: **82101842.1**

(22) Anmeldetag: **09.03.82**

(51) Int. Cl.$^3$: **B 62 K 11/00**
**B 62 K 15/00**

(30) Priorität: **11.03.81 BR 8101474**

(43) Veröffentlichungstag der Anmeldung:
**10.11.82 Patentblatt 82/45**

(84) Benannte Vertragsstaaten:
**AT BE DE NL**

(71) Anmelder: **Imai, Takeshi**
**Rua Baltazar de Veiga no.367 Apt. 171**
**Sao Paulo SP(BR)**

(72) Erfinder: **Imai, Takeshi**
**Rua Baltazar de Veiga no.367 Apt. 171**
**Sao Paulo SP(BR)**

(74) Vertreter: **Patentanwälte Dipl.-Ing. Rudolf Bibrach**
**Dipl.-Ing. Elmar Rehberg**
**Pütterweg 6 Postfach 738**
**D-3400 Göttingen(DE)**

(54) **Personen-Transportfahrzeug für den Individualverkehr.**

(57) Das Vorder– und Hinterrad des luftbereiften Zweirades sind zwischen zwei parallelen, ein in sich steifes Chassis bildenden Rahmenteilen auf Achsen gelagert, wobei das Vorderrad um eine vertikale Achse schwenkbar und mit einem Lenktrieb verbunden ist. Zwischen beiden Rädern ist ein mit Alkohol, Benzin oder einem anderen Kraftstoff zu betreibender Motor mit Kraftstoffbehälter im Chassis untergebracht und mit dem Hinterrad über einen Kettentrieb verbunden.

FIG.1

EP 0 064 141 A1

Croydon Printing Company Ltd.

# BIBRACH & REHBERG

### ANWALTSSOZIETÄT

**0064141**

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35

TELEX: 96616 bipat d

POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

| IR ZEICHEN OUR REF. OTRE REF. | IHR SCHREIBEN VOM YOUR LETTER VOTRE LETTRE | UNSER ZEICHEN OUR REF. NOTRE REF. | D-3400 GÖTTINGEN, PÜTTERWEG 6 |

11.080/kl 8      8.3.1982

Takeshi Imai, Rua Baltazar de Veiga no. 367 apt. 171,
Brazil-Sao Baulo -SP-

Person-en-Transportfahrzeug für den Individualverkehr .

Die Erfindung betrifft ein Personen-Tansportfahrzeug für den
Individualverkehr, ein sogenanntes "Tür-zu Tür"-Fahrzeug.

Angesichts der weltweiten Probleme beim innerstädtischen
Straßenverkehr und der damit verbundenen Treibstoffkosten, wird
intensiv nach neuen Möglichkeiten gesucht, Verkehrssysteme zu
schaffen, die kostengünstig, komfortabel und wirkungsvoll und
insbesondere energiesparend benutzt werden können.

Öffentliche Verkehrsmittel sind zwar relativ wirtschaftlich,
jedoch werden vom Benutzer nach wie vor ermüdende Fußmärsche
verlangt, damit der endgültige Bestimmungsort erreicht werden
kann. Das Automobil ist hier wesentlich besser geeignet, da es
einen sogenannten "Tür-zu- Türverkehr" ermöglicht. Hier ergeben sich jedoch andere Probleme, wie beispielsweise der Parkplatzmangel in den Stadtzentren, die erheblich höheren Kosten und der wesentlich größere Benzinverbrauch, der fast zu einer unwirtschaftlichen Gesamtsituation führt.

Eine weitere Möglichkeit bietet das Motorrad, jedoch ergeben sich auch hier Probleme und Nachteile, da z.B. der Benutzer dem schlechten Wetter ausgesetzt ist und eine größere Unfallgefahr hinnehmen muß. Außerdem ist die Diebstahlsgefahr in Stadtzentren erheblich höher. Fahrräder sind erheblich wirtschaftlicher und insbesondere für kurze Distanzen geeignet, weisen aber insbesondere in bergigem Gelände Nachteile auf, da vom Benutzer größere, körperliche Anstrengungen abverlangt werden. Wie bei den Motorrädern ergibt sich auch hier eine hohe Diebstahlsgefahr und der Benutzer ist schlechtem Wetter und einem erhöhten Unfallrisiko ausgesetzt.

Es besteht daher ein erheblicher Bedarf nach einem Verkehrsmittel, welches die oben genannten Nachteile nicht aufweist, welches kostengünstig in der Anschaffung und in der Unterhaltung ist, und welches zugleich dem Benutzer alle möglichen Vorteile bietet.

Aufgabe der Erfindung ist es daher, ein leicht zu transportierendes Fahrzeug mit geringsten Abmessungen für den Individualverkehr zu schaffen, welches den speziellen Erfordernissen eines jeden Landes in idealer Weise anpassbar ist, und welches auch mit Treibstoffen betrieben werden kann, die im Lande selbst hergestellt werden können, wie beispielsweise Alkohol, wobei eine außergewöhnliche Wirtschaftlichkeit erreicht wird.

-3-

Dies wird erfindungsgemäß erreicht durch ein luftbereiftes
Zweirad, dessen Vorder- und Hinterrad zwischen zwei parallelen,ein in sich steifes Chassis bildenden Rahmenteilen auf
Achsen lagern, wobei das Vorderrad um eine vertikale Achse
schwenkbar und mit einem Lenktrieb verbunden und zwischen
beiden Rädern ein mit Alkohol, Benzin oder einem anderen
Kraftstoff zu betreibender Motor im Chassis untergebracht und
mit dem Hinterrad über einen Kettentrieb verbunden ist.Dabei
ist das ganze Fahrzeug auf ein Minimum zusammenklappbar, in
einer Hülle unterzubringen und von so geringer Abmessung und
Gewicht, daß es als Handgepäck leicht zu transportieren ist.

Ein solches Fahrzeug ist tragbar, kompakt bei geringsten
Anschaffungskosten und ist demzufolge auch von Bevölkerungsschichten mit geringen Einkommen nutzbar. Es läuft auf zwei
Luftreifen und ist mit einem alkoholbetriebenen Motor von etwa
3o cm$^3$ Hubraum, bei einer Leistung von etwa 1PS ausgestattet.
Die durchschnittliche Geschwindigkeit beträgt etwa 2o bis 35 km
pro Stunde. Der Treibstoffverbrauch liegt bei etwa 1,2 Liter
Alkohol pro 1oo km. Es läßt sich ebensogut mit Benzin betreiben, wobei der Treibstoffverbrauch etwa ein Zehntel dessen
ausmacht, was ein sehr wirtschaftliches Automobil verbraucht.
Das Fahrzeug erfüllt damit die Erfordernisse eines alternativen
äußerst wirtschaftlichen Fahrzeuges.

Das erfindungsgemäße Fahrzeug kostet im Vergleich zum wirtschaftlichsten und kostengünstigsten derzeit erhältlichen Auto
nur etwa 8% des Preises. Das kleine Fahrzeug für den Individualverkehr ist tragbar bei einem Gewicht von etwa 8kg, läßt sich

-4-

zusammenklappen und erreicht Durchschnittsgeschwindigkeiten von
2o bis 35 km pro Stunde, bei einer Höchstgeschwindigkeit von
etwa 8o km pro Stunde. Ein Automobil wiegt hingegen 65o bis
15ookg.

Das erfindungsgemäße Fahrzeug bietet eine Reihe technischer,
praktischer und wirtschaftlicher Vorteile, da es in nahezu
vollkommener Weise an die modernen Erfordernisse des Straßenverkehrs angepaßt ist, erheblich weniger Parkraum erfordert,
die Verstopfung öffentlicher Straßen vermindert und die
Ausgaben für den öffentlichen Straßenverkehr senkt. Darüber
hinaus werden die sozialen Bedürfnisse der Bevölkerung
berücksichtigt. Es werden insbesondere die Zeiten verringert,
die in öffentlichen Verkehrsmitteln verbracht werden müssen,
wodurch sich außerdem weniger Verkehrsstauungen ergeben und
sich die zur Verfügung stehende Freizeit weiter vergrößert.

Einer der großen Vorteile der Erfindung besteht darin, daß der
Benutzer sein Fahrziel von Tür zu Tür erreichen kann und zwar
auf kurzen und mittleren Entfernungen, und daß auch in
Verbindung mit öffentlichen Verkehrsmitteln. Er kann demnach
von seiner Haustür aus, sein Fahrziel erreichen, genausogut
natürlich in umgekehrter Richtung, selbst wenn größere
Entfernungen zurückzulegen sind, beispielsweise von einem
Stadtviertel zum anderen, oder vom Stadtrand in die Innenstadt.
Dies wird dadurch ermöglicht, daß das erfindungsgemäße Fahrzeug

-5-

äußerst kompakt ist und bei geringem Gewicht vollständig zusammengeklappt werden kann. Es läßt sich dann leicht mit der Hand tragen, wobei es in zusammengeklappten Zustand ein nur geringes Volumen einnimmt. Es kann dann mit Befestigungseinrichtungen zusammengehalten werden und ist etwa kofferförmig ausgebildet, wobei auch ein Handgriff vorgesehen sein kann. Es läßt sich daher auch in öffentlichen Verkehrsmitteln mitführen, beispielsweise in Bussen, der Untergrundbahn oder Taxis, so daß auch ein gemischter Betrieb möglich ist. Schließlich läßt es sich im Auto mitführen, so daß ein Verkehr vom Parkplatz aus, mit dem erfindungsgemäßen Fahrzeug zum endgültigen Zielort möglich ist. Die äußere des zusammengeklappten Fahrzeuges läßt ein Teil des Vorderrades frei, so daß das zusammengeklappte Fahrzeug mittels einer Führungsstange auf dem Vorderrad weggerollt werden kann. Diese Führungsstange läßt sich ebenfalls zusammenklappen, oder teleskopartig ineinanderschieben.

Das erfindungsgemäße Fahrzeug ist demzufolge von geringer Größe, robust aber trotzdem leicht im Aufbau, wirtschaftlich und wirkungsvoll im Einsatz und es löst die verschiedensten Probleme im Hinblick auf den öffentlichen Straßenverkehr und den damit zusammenhängenden Kraftstoffverbrauch. Es weist dabei zugleich verschiedene neue Eigenschaften auf.

-6-

Eine Ausführungsform der Erfindung wird im folgenden anhand der beigelegten Zeichnungen im einzelnen erläutert. Dabei zeigen:

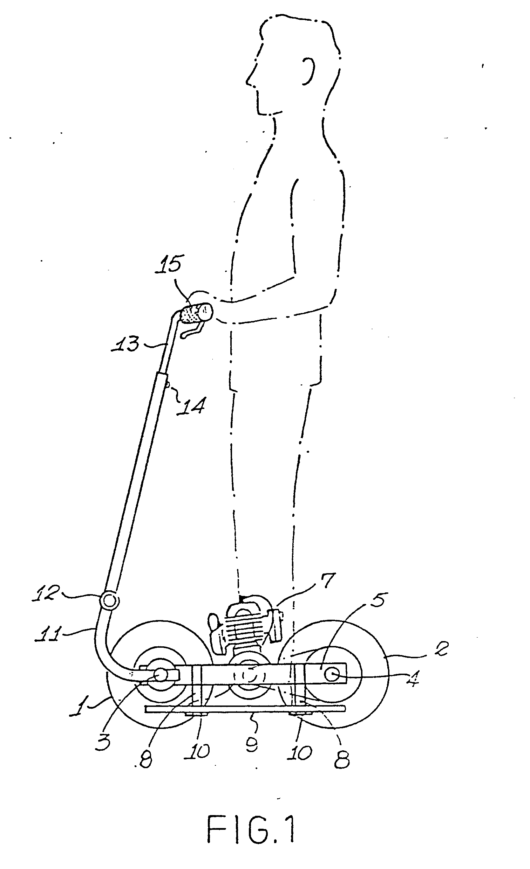

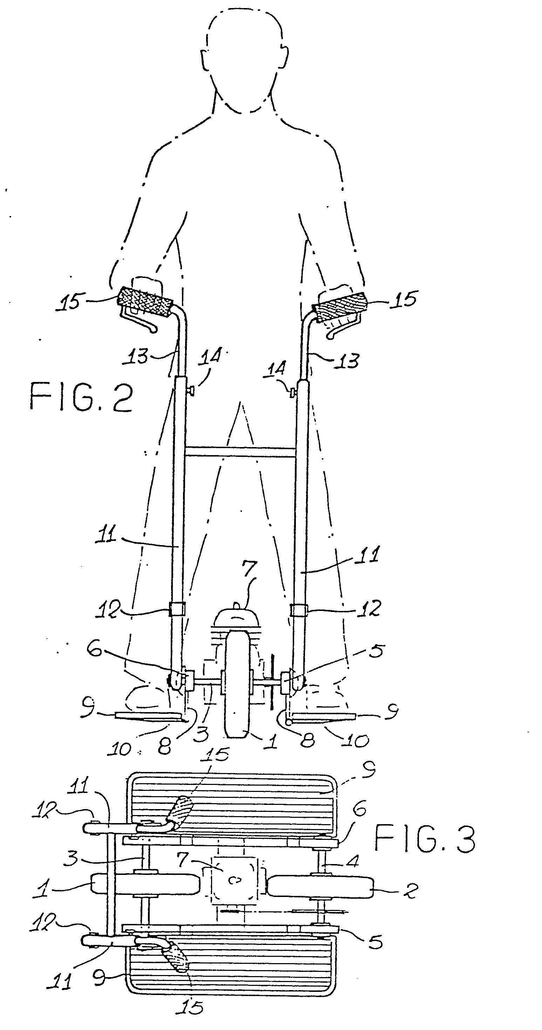

Fig. 1 bis 3 — eine Seiten-, eine Front- und eine Draufsicht auf das Fahrzeug;

Fig. 4 — eine Seitenansicht des zusammengeklappten Fahrzeuges in einer Tragetasche;

Fig. 5 — eine schematische Darstellung einer möglichen Verwendungsart des Fahrzeuges;

Fig. 6 und 7 — verschiedene Möglichkeiten, das zusammengeklappte zu transportieren.

Wie aus den beigefügten Zeichnungen einer Ausführungsform des Tür- zu Tür-Fahrzeuges zu ersehen ist, läuft dieses auf zwei Lufträdern und zwar einem Vorderrad 1 und einem Hinterrad 2, welche auf entsprechenden Achsen 3 und 4 lagern. Diese sind ihrerseits in Lagerungen zwischen zwei zueinander parallelen Trägern 5 und 6 angeordnet, die das Fahrzeugchassis bilden.

Die Achse 3 der Vorderrades 1 ist so im Chassis angeordnet, daß sie um ihren Mittelpunkt schwenkbar ist, ihre Enden in Schlitzen in den beiden parallelen Trägern 5,6 geführt sind, die mit Kugelflächen oder ähnlichen Einrichtungen versehen sind, und damit die Lenkung des Vorderrades 1 ermöglichen.

Innerhalb des Fahrzeugchassis ist der Motor 7 angeordnet, der etwa einen Hubraum von 3o cm$^3$ bei einer Leistung von etwa 1PS aufweist. Ein solcher Motor ist leicht, stark, kompakt und haltbar und läßt sich mit Alkohol betreiben. Es können selbstverständlich auch andere Treibstoffe, wie beispielsweise Benzin Verwendung finden. Der Motor ist über eine Kette und ein Kettenrad mit dem Hinterrad 2 verbunden. Hierbei ist üblicherweise eine Übersetzung vorgesehen, damit das Fahrzeug im gewünschten Geschwindigkeitsbereich betrieben werden kann.

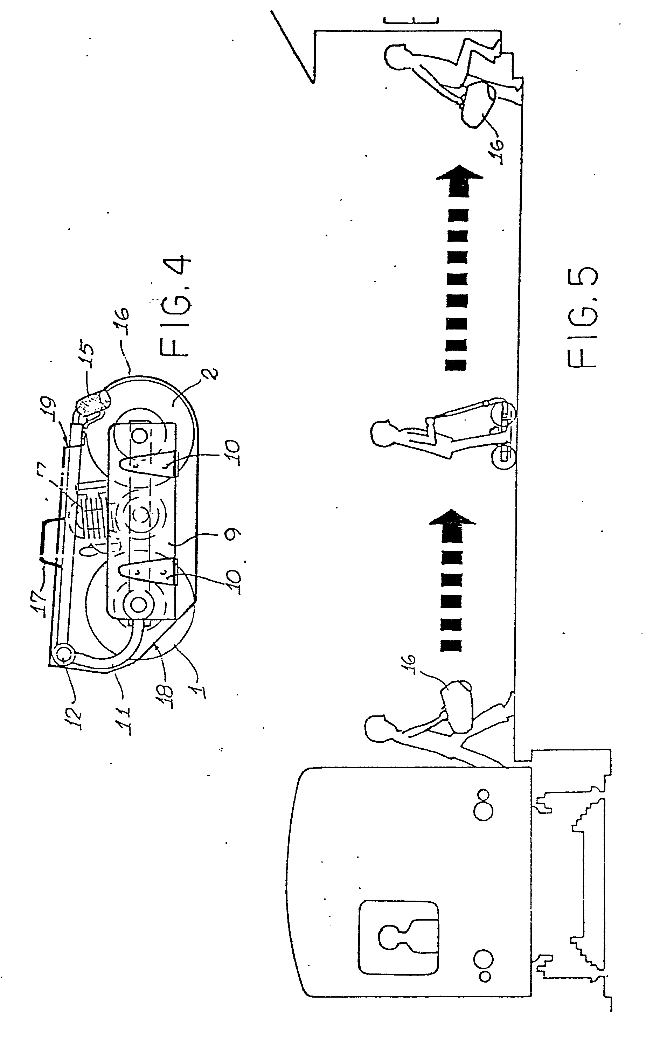

Mittels am Fahrzeugchassis vorgesehener Träger 8 sind zu beiden Seiten des Fahrzeuges Fußplatten 9 befestigt, wobei Schaniere 1o vorgesehen sind, mit welchen die Fußplatten 9 hochgeklappt werden können, wie dies z.B. in Fig. 4 dargestellt ist.

Auf der Achse des Vorderrades 1 ist ein einfacher oder doppelter Lenker 11 befestigt, der entsprechend gebogen und mit einem Gelenk 12 in der Nähe der Radoberkante versehen ist. Der Lenker 11 weist Teleskopelemente 13 auf, welche nach dem Lösen von Befestigungsbolzen 14 eine Höhenverstellung ermöglichen .

An den auswärtsgebogenen Enden der Teleskopteile 13, sind Handgriffe 15 vorgesehen, welche dem Benutzer den nötigen Halt geben, und welche zum Lenken, Gasgeben, Bremsen und zu anderen Zwecken benutzt werden können.

Das Fahrzeug ist zweckmäßigerweise mit einem Kupplungssystem ausgerüstet, welches den Motor beim Anschieben des Fahrzeuges startet. Dabei wird durch eine Fliehkraftkupplung die Kurbelwelle des Motors in Drehung versetzt, so daß dieser anspringt.

Sobald der Motor läuft, kuppelt sich diese Vorrichtung aus, so daß der Motor frei läuft.

Gemäß Fig. 4 läßt sich der Lenker 11, um das Gelenk 12 nach hinten klappen, so daß er in der Längsachse des Fahrzeuges liegt. Die Fußplatten 9 lassen sich an das Fahrzeugchassis nach oben heranklappen, wodurch die Breite des Fahrzeuges verringert wird. Das so auf ein geringes Volumen zusammengeklappte Fahrzeug kann in einer Hülle 16 untergebracht werden, die beispielsweise mit Reißverschlüssen oder ähnlichen Einrichtungen verschlossen wird. Die Hülle 16 kann mit einem Handgriff 17 versehen sein, so daß das zusammengeklappte Fahrzeug handtaschenähnlich tragbar ist.

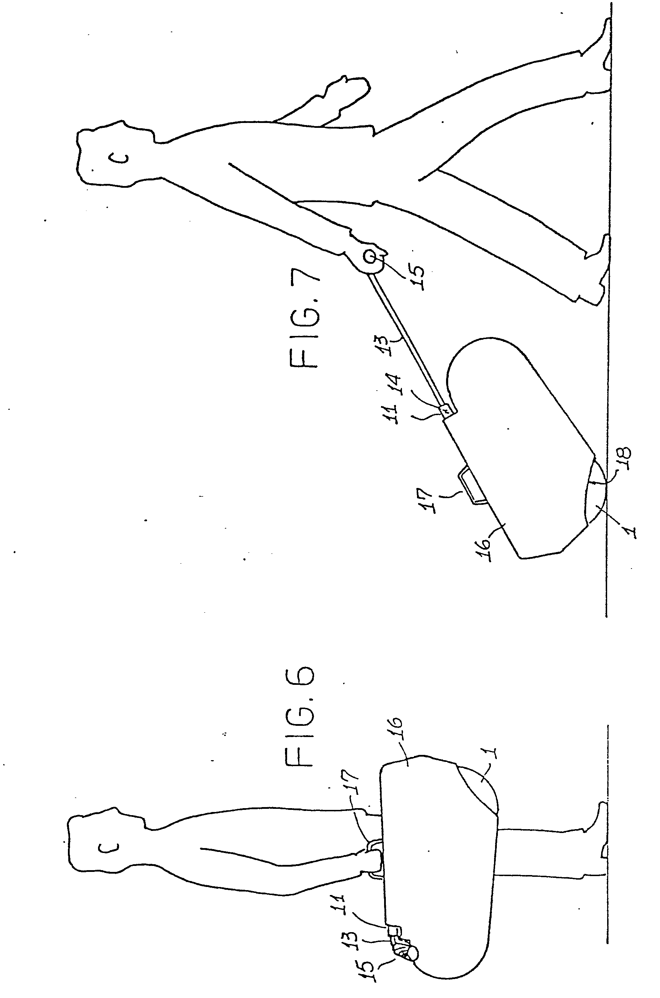

Die Hülle kann schließlich an der Vorderseite eine Öffnung 18 aufweisen, durch die ein Teil des Vorderrades 1 hindurchragt. Der Lenker 11 kann durch eine Öffnung 19 am hinteren Ende der Hülle herausgezogen werden. Das teleskopartige Ende 13 bildet dann gemäß Fig. 7 einen Handgriff, an welchem das Fahrzeug, auf dem Vorderrad rollend, gezogen werden kann.

Eine andere Transportmöglichkeit ist in Fig. 6 dargestellt, bei der daß zusammengeklappte Fahrzeug nach Art einer Handtasche oder eines Koffers getragen wird, was bei dem verhältnismäßig geringen Gewicht des Fahrzeuges sehr einfach ist.

Solche Transportmöglichkeiten des Fahrzeuges werden insbesondere dann benutzt, wenn ein Gebäude,ein öffentliches Verkehrsmittel, wie z.B. ein Autobus, Untergrundbahn oder Eisenbahn, Bahnhöfe oder andere Orte betreten werden, bei denen das Fahrzeug getragen werden muß und seine Benutzung als Verkehrsmittel nicht möglich oder nicht erlaubt ist.

In der obigen Beschreibung mit den zugehörigen Zeichnungen ist
nur eine bevorzugte Ausführungsform des Fahrzeuges dargestellt.
Diese ist jedoch in keiner Weise beschränkt, sondern läßt
vielmehr vielseitige Änderungsmöglichkeiten offen. Sie dient im
wesentlichen zur Erläuterung des Grundkonzeptes der Erfindung.
Das beschriebene Fahrzeug für den Tür- zu Tür- Individualverkehr läßt vielmehr die unterschiedlichsten Abänderungen
und/oder Verbesserungen zu, die jedoch alle im Bereich der
Erfindung liegen.

Beispielsweise kann das Fahrzeug an anderen Stellen zusammengeklappt werden, um es auf das geringstmögliche Volumen zu
bringen. Es kann dabei zusätzlich eine weitere Teleskopeinrichtung vorgesehen sein.

Darüber hinaus können die Fahrzeugräder mit einem Federungssystem verbunden sein, ebenso wie beispielsweise die
Fußplatten, so daß Fahrbahnunebenheiten ausgeglichen werden und
der Komfort und die Sicherheit für den Benutzer erhöht werden.

Außerdem kann beispielsweise die Hülle am Lenker befestigt und
taschen-oder sackähnlich ausgebildet sein, so daß andere
Gegenstände darin transportiert werden können. Weiterhin können
Änderungen vorgenommen werden, um nicht nur die Funktion des
Fahrzeuges zu verbessern, sondern auch seine äußere Erscheinung
und den Fahrkomfort.

Zusammengefasst handelt es sich um ein Fahrzeug geringer Größe
mit zwei luftbereiften Rädern und einem alkoholbetriebenen
Motor. Selbstverständlich lassen sich auch andere Motoren, beispielsweise für den Benzinbetrieb verwenden. Sie weisen etwa einen Hubraum von 3o $cm^3$, bei einer Leistung von etwa 1 PS auf und es wird eine durchschnittliche Fahrgeschwindigkeit von 2o bis 35 km pro Stunde erreicht, wobei sich ein Treibstoffverbrauch von etwa 1 Liter auf 75km ergibt. Das Fahrzeug ist insbesondere für den Individualverkehr geeignet und ist mit seinen Anschaffungs- und Unterhaltungskosten an das Einkommen breiter Bevölkerungskreise angepaßt. Es läßt sich im gemischten Betrieb verwenden und kann innerhalb von öffentlichen Transportmitteln, wie Bus, Untergrundbahn, Eisenbahn odgl., oder auch einem Auto getragen werden und im Anschluß daran zum Erreichen des endgültigen Fahrzieles auseinandergeklappt und zum Fahren benutzt werden. Die Anschaffungskosten sind wie bereits gesagt gering, so daß es sich auch insbesondere für geringer verdienende Bevölkerungsschichten eignet. Die Aufenthaltszeiten in öffentlichen Verkehrsmitteln werden verringert und damit auch Verkehrsstauungen, insbesondere während der Spitzenzeiten, so daß dem Benutzer mehr Freizeit zu Verfügung steht, die er beispielsweise seiner Familie widmen kann. Es ist darüber hinaus ein sehr volkstümliches Fahrzeug, welches die verschiedensten Bedürfnisse erfüllt, wodurch die Wirksamkeit der öffentlichen Verkehrsmittel erhöht wird und zugleich infolge des geringen Kraftstoffverbrauches, die Abhängigkeit vom Erdöl vermindert wird.

Patentansprüche :

Personentransportfahrzeug für den Individualverkehr, gekennzeichnet durch seine Ausführung als luftbereiftes Zweirad, dessen Vorder- (1) und Hinterrad (2) zwischen zwei parallelen, ein in sich steifes Chassis bildenden Rahmenteilen (5 und 6) auf Achsen (3 und 4) lagern, wobei das Vorderrad (1) um eine vertikale Achse schwenkbar und mit einem Lenktrieb (11 bis 15) verbunden und zwischen beiden Rädern (1 und 2) ein mit Alkohol, Benzin oder einem anderen Kraftstoff zu betreibender Motor (7) mit Kraftstoffbehälter im Chassis (5, 6) untergebracht und mit dem Hinterrad (6) über einen Kettentrieb verbunden ist.

2. Personentransportfahrzeug nach Anspruch 1, dadurch gekennzeichnet, daß die Fahrzeugteile von geringster Abmessung und geringstem Gewicht und bei Nichtgebrauch zusammenklappbar und in einer Hülle unterbringbar sind.

3. Personentransportfahrzeug nach Anspruch 1, dadurch gekennzeichnet, daß auf beiden Seiten des Chassis (5, 6) Träger (8) für jeweils ein hochklappbares Trittbrett (9) vorgesehen sind.

4. Personentransportfahrzeug nach Anspruch 1 bis 3, dadurch gekennzeichnet, daß die Achse des Vorderrades in einer einfachen oder doppelten Gabel (11) des Lenktriebes lagert, die entsprechend gekrümmt und die etwa oberhalb des Vorderrades mit einem Gelenk (12) versehen ist um sie umzuklappen, und daß im oberen Teil der Gabel teleskopartige Verlängerungen (13) vorgesehen sind, die mittels einer Verschraubung (14) in der Höhe feststellbar sind, und daß schließlich die oberen Enden der teleskopartigen Verlängerungen (13) mit nach außen gerichteten Bedienungsgriffen (15) für die Fahrzeugbetätigung versehen sind.

5. Personentransportfahrzeug nach Anspruch 1 bis 4, dadurch gekennzeichnet, daß der Lenktrieb im Gelenk (12) nach hinten in der Längsrichtung des Fahrzeuges umklappbar und die Trittbretter zu beiden Seiten des Chassis hochklappbar sind, und daß damit das Fahrzeug auf geringstes Volumen zusammenklappbar und in eine Hülle (16) einführbar ist, die ihrerseits mit Hilfe eines Reißverschlusses oder anderer Verschlußglieder zu verschließen und mit einem Griff (17) versehen ist, so daß das Fahrzeug als Handgepäck transportierbar ist.

6. Personentransportfahrzeug nach Anspruch 5, dadurch gekennzeichnet, daß die Hülle (16) eine Frontöffnung (18) für das Vorderrad (1) aufweist, und daß weiterhin in der Hülle eine Öffnung (19) vorgesehen ist zum Hindurchführen des oberen Teiles der Lenkstange, die zu einem Transportgriff ausziehbar ist.

FIG.1

FIG. 2

FIG. 3

FIG.4

FIG.5

FIG.6

15  13  11              17

16

1

FIG.7

11  14  13

17              15

16

1  18

4/4

0064141

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 182 540 (HEINRICHS) <br> * Seite 1, Zeilen 35-58; Figuren * | 1 | B 62 K 11/00 <br> B 62 K 15/00 |
| Y | FR-A-2 219 050 (DI BLASI) <br> * Insgesamt * | 1 | |
| A | US-A-3 666 293 (SCHLAPKOFF) <br> * Insgesamt * | 1,2 | |
| A | US-A-2 910 130 (SCHLAPHOFF) <br> * Insgesamt * | 1,4 | |
| A | FR-A-2 384 667 (TOMY KOGYO) <br> * Insgesamt * | 1,4 | |
| A | US-A-3 554 311 (THOMPSON) <br> * Figuren 1-4 * | 1,3 | RECHERCHIERTE SACHGEBIETE (Int. Cl. ³) |
| A | DE-A-2 602 949 (ADAMS) <br> * Seite 9, Zeilen 12-19; Figuren * | 3,5 | B 62 K <br> B 62 M |
| A | FR-A-1 439 508 (RIZZATO) <br> * Seite 2, linke Spalte, Zeilen 19-27; Figuren * | 4 | |
| A | DE-B-1 030 710 (VALMOBILE) <br> * Insgesamt * | 4-6 | |

---

-/-

Der vorliegende Recherchenbericht wurde für alle Patentansprüche erstellt.

| Recherchenort | Abschlußdatum der Recherche | Prüfer |
|---|---|---|
| DEN HAAG | 10-06-1982 | NADELHOFFER J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

# 0064141

## EUROPÄISCHER RECHERCHENBERICHT

Nummer der Anmeldung

EP 82 10 1842

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-1 078 337 (FENOUIL) | | |
| | ----- | | |

RECHERCHIERTE SACHGEBIETE (Int. Cl. ³)

Der vorliegende Recherchenbericht wurde für alle Patentansprüche erstellt.

| Recherchenort DEN HAAG | Abschlußdatum der Recherche 10-06-1982 | Prüfer NADELHOFFER J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82